# EUROPEAN PATENT APPLICATION

(11) **EP 4 763 499 A1**
(43) Date of publication of application: **24.06.2026**
(21) Application number: 24222718.9
(22) Date of filing: 23.12.2024
(51) Int. Cl.: B29D 30/06, B60C 11/24

(54) **A TYRE, A PART OF A MOULD FOR MANUFACTURING A TYRE, AND A METHOD FOR MANUFACTURING A TYRE**

(71) Applicant: Nokian Renkaat Oyj, 37101 Nokia (FI)
(72) Inventor: KORKAMA, Tomi, 37101 Nokia (FI); LEPISTÖ, Samu, 37101 Nokia (FI)
(74) Representative: Berggren Oy

(57) **Abstract**

The invention relates to a tyre (100) comprising a first tread block (121) made of first material, an insert (200) made of second material arranged in the first tread block (121), the second material being visually distinctive from the first material, and multiple first slits (210) arranged around the insert (200). The invention also relates to a method for manufacturing a tyre in a mould (400). The method comprises unfastening a first part (300a) from the mould (400), fastening a second part (300b) to the mould (400) to the same location from which the first part (300a) was unfastened, arranging a green tyre (105) into the mould (400), and vulcanizing the green tyre (105). The invention also relates to a part (300) for a mould for manufacturing a tyre. The part (300) for the mould comprises a first surface (311) and a second surface (312) opposite the first surface (311), a fixing means (320) on the second surface (312) for attaching the body (310) to the mould for manufacturing the tyre, and a post (330) protruding from the first surface (311). The first surface (311) is concave and curved in two directions (dir1, dir2).

## Description

### Technical field

The invention relates to tyres, such as pneumatic tyres. The invention relates to methods for manufacturing tyres. The invention relates to moulds used for manufacturing tyres.

### Background

A tyre comprises a tread, which most often comprises tread blocks and grooves arranged in between tread blocks. The purpose of the grooves is to guide water and/or slush and/or snow away from a contact area between the tread and the road. When tyres are used, they wear, and as a result the grooves become shallower. When a depth of a groove goes below a certain limit, the capability of guiding the water and/or slush and/or snow away from the contact area is reduced to such an extent, that safe driving is compromised. For these reasons, a tread of a tyre is known to comprise a drive safe indicator capable of indicating a depth of the groove as a visual symbol, as disclosed e.g. in the document EP4056386. Thus, an insert is provided in a hole of the tread, and the visual appearance of the insert differs from that of the tread, and also changes as the insert wears along with the rest of the tread.

It has been found, that in certain cases the rubber material of the tread near such an insert (i.e. wear indicator) does not wear as fast as the rubber material of the rest of the tread. The rubber material near the insert may e.g. wear faster than the rest of the tread. As detailed below, the inventors have found a solution that ensures more even tread wear also locally near the insert, which affects also the even wear of the insert.

In general, a tyre is often manufactured by vulcanizing (i.e. curing) a green tyre in a mould, as disclosed e.g. in the document EP4424525. Generally, a mould comprises a plurality of segments, the plurality of segments configured to be in a first position and a second position, wherein, in the first position, the segments are arranged next to each other to form an annular mould for a green tyre, and in the second position, the segments are arranged apart from each other to remove the tyre from the mould. The segments are provided with ridges for forming grooves to the tread of the green tyre, the grooves separating the tread blocks of the tread. The segments may be provided with lamella blades for forming sipes to the tread blocks. In general, a mould for a tyre, or a segment for a mould for a tyre, is very expensive because of the complexity of the mould or the mould segment.

In view of product variability, in certain cases it is beneficial that the wear indicator of the insert-type is used only in certain first product line, while a second product line can be free from the wear indicator, but otherwise like the first product line. Thus, the second product line could be, e.g. a more cost-effective product line, because the wear indicator and the insertion thereof to the tyre increases manufacturing costs. However, this kind of approach is conventionally also prevented by the manufacturing costs of the tyre mould or the mould segment. The inventors have also found a way of significantly decreasing the costs related to manufacturing of different moulds for tyres of different product lines.

### Summary

Without being bound to a theory, the inventors consider that sipes of the tread blocks and grooves between the tread blocks affect the wearing of the tread at least locally near the sipes or/and the grooves. Moreover, in prior art, sipes have not been arranged close to the insert of the wear indicator, thereby effectively hardening the tread near the insert compared to other regions of the tread. Thus, the inventors have found that when the tread block having the insert of the wear indicator is provided with multiple first slits arranged around the insert, the tread block wears move evenly with the rest of the tread. Such a tyre is more specifically disclosed in claim 1.

To be able to manufacture such a wear indicator to a tyre in a mould, the inventors have found that a part of the mould can be made to be changeable. Such a part for the mould comprises fixing means for attaching a body of the part to the mould for manufacturing the tyre. The part may be configured to form suitable holes to the tread in view of the insert of the wear indicator to form a tyre with an insert-type wear indicator. However, to produce a tyre without the insert-type wear indicator, another part can be used instead of that part. In line with this, when manufacturing a tyre, a first part is unfastened from the mould and a second part is thereafter fastened to the mould to the same location from which the first part was unfastened. Thereafter, the tyre can be manufactured in a traditional manner. Notably, the inventors have found that such a method is usable also in a context, wherein the insert is of more general type; e.g. for producing a tyre with a hole for an insert, such as a wear indicator or a stud, the hole not being surrounded by slits. Such a manufacturing method is disclosed in more detail in claim 15.

Concerning the part for the mould, the part being interchangeable with another part for the mould, the inventors have found that for obtaining a smooth tread of the tyre, a first surface of the part for the mould should be curved in two directions that are perpendicular to each other such that the first surface is concave. Thus, the first surface is configured to form a part of a tread of a tyre, and a smooth tread also at the location of the part of the mould. Moreover, the part comprises fixing means for fixing the part for mould to the mould, such as to a mould segment of the mould. The fixing means are arranged on a second surface, which is opposite the first surface. Even if the part for mould can be for making a hole and slits of the tyre having the insert-type wear indicator as discussed above, the mould can be for making a hole for more general purposes, too, including forming a hole for a general insert, such as a wear indicator or a stud. Such a part for the mould is disclosed in more detail in claim 8.

The dependent claims, the description, and the figures disclose embodiments of the invention and are intended for understanding various aspects of the invention.

### Brief description of the drawings

- Fig. 1a: shows a tyre,
- Fig. 1b: shows the part Ib of Fig. 1a in more detail,
- Fig. 1c: shows the part Ic of Fig. 1b, in more detail,
- Fig. 1d: shows the part Id of Fig. 1c, in more detail,
- Figs. 1e1 - 1e5: show various shapes for the first and second slits as cross-sectional views,
- Fig. 2a: shows a cross-section of a first tread block comprising a blind hole for an insert,
- Fig. 2b: shows a cross-section of a first tread block comprising an insert arranged in the blind hole of Fig. 2a,
- Fig. 3a: shows a part of a tread comprising tread blocks provided with sipes, a first tread block comprising an insert,
- Fig. 3b: shows (on left-hand side) a part of a tread comprising two tread blocks and a groove in between and (on right-hand side) one tread block formed by filling the groove shown on the left-hand side with tread material, wherein the insert is arranged in the tread block,
- Fig. 4: shows a cross-section of a first tread block comprising an insert and a second tread block, wherein a groove is provided between the first and the second tread block,
- Figs. 5a to 5f: show schematically a method for manufacturing a tyre in a mould,
- Fig. 6a: shows a part for a mould in a first perspective view,
- Fig. 6b: shows the part for a mould of Fig. 6a in a second perspective view,
- Fig. 6c: shows a cross section of a part for a mould somewhat like the part of Fig. 6a,
- Fig. 6d: shows a cross section of a part for a mould somewhat like the part of Fig. 6c,
- Fig. 7a: shows schematically a first cross-section of a part for a mould,
- Fig. 7b: shows schematically a second cross-section of a part for a mould,
- Fig. 8a: shows a part for a mould in a first perspective view,
- Fig. 8b: shows a cross section of a part for a mould of Fig. 8a,
- Fig. 9a: shows a part for a mould in a first perspective view,
- Fig. 9b: shows the part for a mould of Fig. 9a in a second perspective view,
- Fig. 10: shows in detail some measures of a part for a mould,
- Fig. 11a: shows a part for a mould in a first perspective view,
- Fig. 11b: shows a cross-section of the part for mould of Fig. 11a,
- Fig. 11c: shows the part for a mould of Fig. 11a in a second perspective view,
- Figs. 12a and 12b: show parts for a mould,
- Fig. 13a: shows a part for a mould,
- Fig. 13b: shows a pattern manufacturable by the part for mould of Fig. 13a,
- Fig. 14a: shows a part for a mould,
- Fig. 14b: shows a pattern manufacturable by the part for mould of Fig. 14a,
- Fig. 15a: shows a part for a mould,
- Fig. 15b: shows a pattern manufacturable by the part for mould of Fig. 15a,
- Fig. 16a: shows a schematic view of a part for a mould,
- Fig. 16b: shows a part for a mould,
- Fig. 16c: shows the part for a mould of Fig. 16b in a perspective view.
- Fig. 17: shows schematically how three parts for a mould are arranged at different locations of a mould segment, and
- Figs. 18a to 18c: shows separately the three parts for a mould of Fig. 17.

### Detailed description

In this description, the following terms are used:
A sipe refers to a narrow groove provided in a tread block of a tyre. A width of a sipe may be e.g. 0.2 mm to 1 mm, such as 0.2 mm to 0.7 mm. A lamella refers to a part of rubber arranged in between two adjacent sipes. A lamella plate refers to a plate that is usable for forming a sipe in a moulding process.

A groove refers to a wider and longer groove limiting tread blocks of the tread. A width of a groove may be e.g. at least 1 mm, such as 1 mm to 7 mm. A part of a groove is arranged between a first tread block and another tread block. A groove is typically deeper than a sipe.

A tread block refers to a part of a tread that is configured to make a contact with ground when the tyre is used as designed. A tread block thus forms a land area. The tread block may be large or small. A tread block may have the shape of a rib continuously extending around the entire tyre, e.g. at a centre of the tread, whereby no transversal groove extends from a boundary B1 of the tread to an opposite boundary B2. Smaller tread blocks may be arranged between a boundary (B1, B2) of the tread and the tread block that extends around the tyre. A tyre does not need to comprise a continuously extending tread block. Instead, a tyre may only comprise reasonably small tread blocks, whereby several transversal grooves may extend from a boundary B1 of the tread to an opposite boundary B2.

An insert 200 refers to a part arranged in a blind hole 202 of a tread block, the insert 200 being visually distinctive from the tread block in which the insert 200 is arranged. The insert 200 may be e.g. made of elastic material having a different colour than the tread block; or the insert may be a stud.

A slit (e.g. a first slit 210 and a second slit 220) refers to a more or less narrow blind hole arranged in the tread block reasonably close to the insert 200. Compared to a sipe, a sipe may be much longer than a slit. Moreover, a sipe may be arranged also to such treads block that do not comprise an insert. Finally, a depth of a slit may be different than a depth of a sipe.

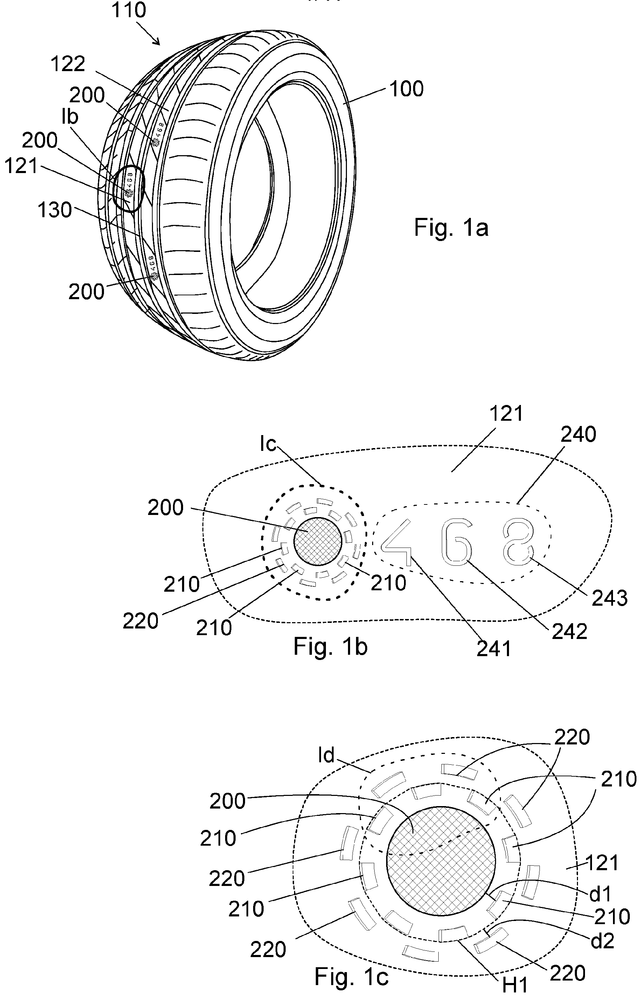

Figure 1a shows an embodiment of a tyre 100. The tyre comprises a tread 110. The tread comprises a first tread block 121. The first tread block 121 limits a part of a groove 130. A part of the groove 130 is arranged between the first tread block 121 and further tread blocks, e.g. a second tread block 122. Typically, the tread comprises numerous further tread blocks including a third tread block 123. The first tread block 121 is made of first material. Also, the further tread blocks are made of the first material. The first material is, in an embodiment, rubber. The first material is, in an embodiment, rubber comprising such filler that gives the tread is distinctive colour. E.g. the rubber material may comprise a filler that gives the rubber its characteristic colour, e.g. black. In an embodiment, the first material is such rubber that a Shore (A) hardness of the material is in the range 48 to 73 Sh(A). However, the uneven wear of the tread may be more prominent in softer tyres than in harder tyres. Therefore, in an embodiment, the first material is such rubber that a Shore (A) hardness of the material is in the range 48 to 67 Sh(A), preferably 48 to 63 Sh(A). Herein the Shore (A) hardness values are measurable with durometer type A, according to standard ASTM D2240. The standard indicates that the hardness values are measurable e.g. at the temperature 23 °C.

Figure 1b shows in detail the part Ib of Fig. 1a. As shown therein, the tyre comprises an insert 200. The insert 200 is made of second material, which is visually distinctive from the first material. The insert 200 is arranged in the first tread block 121. The insert 200 is arranged in a blind hole 202 limited by the first tread block 121. A purpose of the insert 200 may be e.g. to indicate a degree of wear of the tread 110. However, as detailed below, a method for manufacturing a tyre can be used also in such a context that the insert 200 is, e.g., a stud.

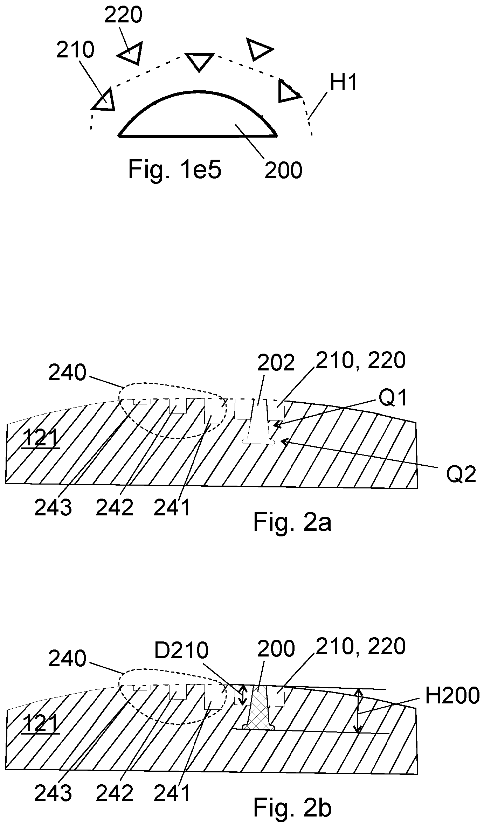

Referring to Figs. 2a and 2b, the tyre 100 can be manufactured by first manufacturing a tyre 100 having a blind hole 202, and then inserting the insert 200 into the blind hole 202 as well known in the art. The insert 200 can be inserted into the blind hole 202 e.g. in a substantially similar manner as a stud is inserted into a stud hole. Fig. 2a shows in the vicinity of the blind hole 202 also first and second slits 210, 220. Fig. 2b shows an embodiment, wherein the insert 200 has been arranged in the blind hole 202 of Fig. 2a. A height H200 of the insert 200 is at least 6 mm. Typically, the blind hole 202 is as deep as the insert 200 is high. Therefore, the insert does not need to protrude from the first tread block 121. However, if a stud is used as an insert 200, at least a pin of the stud should slightly protrude from the first tread block 121. A height H200 of the insert 200 may be e.g. 6 to 30 mm, such as 6 to 15 mm or 6 to 10 mm, depending on the type of the tyre and the type of the insert. The insert 200 may extend at least 6 mm below the tread 110 defined by a surface of the first tread block 121.

Referring to Figs. 1b to 1d, the tyre comprises multiple first slits 210 arranged around the insert 200. The first slits 210 are arranged in the first tread block 121, which also comprises the insert 200. A purpose of the first slits 210, particularly when the insert 200 is a solid wear indicator, is to ensure that the first tread block 121 wears as rapidly as the rest of the tread 110. Moreover, multiple first slits 210 are arranged around the insert 200 instead of a single hole surrounding the insert to increase a bending stiffness of the rubber material around the insert 200; namely, if a single narrow slit fully encircling the insert 200 was used, the insert could easily bend in a tangential direction of the tread 110. In this way, the material of the first tread block 121 in between the first slits 210 prevents excessive bending of the insert 200.

When the insert 200 is a solid wear indicator, the insert 200 itself is preferably made of an elastomer material. Herein the term solid wear indicator is used for the insert 200, which is made of solid material and used as a wear indicator, as opposed to a wear indicator formed as only empty blind holes 241, 242, 243 discussed in detail later. In an embodiment, wherein a purpose of the insert 200 is to indicate tread wear, the insert 200 comprises at least one of the following materials: liquid silicone rubber (LSR), high temperature vulcanized (HTV) silicone, plastic, and polyurethane. However, it has been found that even if these materials are reasonably soft, the wear of the first tread block is not always equal to the wear of other parts of the tread 110, if the first slits 210 are not provided in the first tread block 121. This applies at least is such tyre, wherein the tread block 121, 122, 123 have been provided with sipes 150.

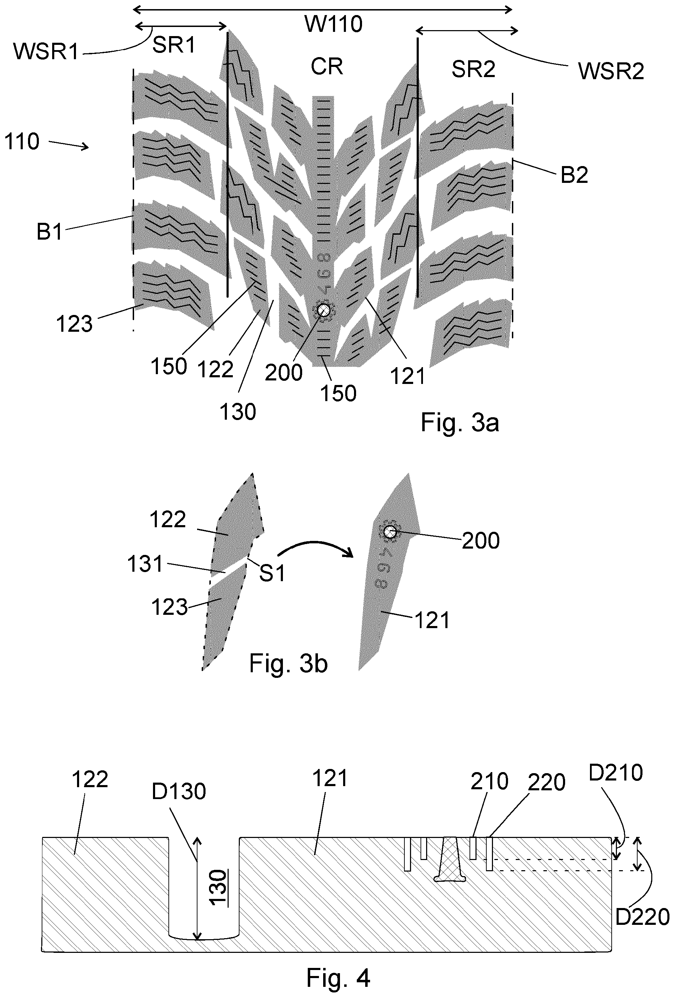

A depth D210 of at least some of the first slits 210 is 20 % to 90 % of a depth D130 of the groove 130 (shown in Fig. 4). Preferably, a depth D210 of at least some of the first slits 210 is 30 % to 70 % of a depth the groove 130. As shown in Fig. 4, a part of the groove 130 remains in between the first tread block 121 and a second tread block 122 so that the first tread block 121 limits a part of the groove 130. Fig. 3a shows an embodiment, wherein the first tread block 121 is reasonably large and how the first tread block limits a part of the groove 130. Even if not shown in Fig. 3a, the tread pattern of Fig. 3a may be repeated circumferentially throughout the entire circumference of the tyre, whereby the first tread block 121 is a tread block (i.e. rim) extending continuously around the circumference of the tyre 100. Moreover, the tread of Fig. 3a does not comprise a transversal groove extending from the first boundary B1 of the tread 110 to a second boundary B2 of the tread 110, the second boundary B2 being opposite the first boundary B1.

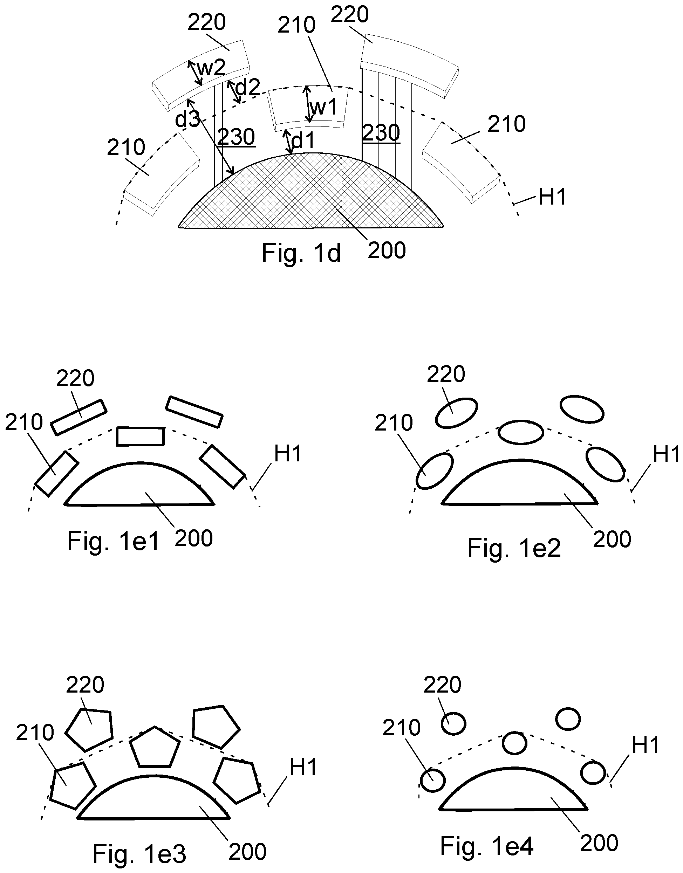

Moreover, referring to Fig. 1d, at least some of the first slits 210 are arranged a distance d1 apart from the insert 200. The distance d1 is 1 mm to 5 mm. The distance d1 in combination with the depth D210 of the first slits 210 has been found optimal in terms of properly softening the first tread block 121 so that the wear of the first tread block 121 is as fast as the wear of the other tread blocks 122, 123. In an embodiment, all the first slits 210 have been arranged equally far away from the insert 200. In an embodiment, all the first slits 210 have been arranged equally far away from the blind hole 202 into which the insert 200 has been arranged.

As detailed above, this applies at least when the further tread blocks (e.g. second and third tread blocks 122, 123) have been provided with sipes 150 and/or when the first tread block 121 has been provided with sipes 150. In particular, this applies when all the tread blocks of the tread 110 have been provided with sipes 150. Sipes 150 are illustrated in Fig. 3a.

Another embodiment, wherein uneven tread wear may easily rise, if the first slits 210 were not used, is shown in Fig. 3b. The left-hand side of Fig. 3b shows a second tread block 122, a third tread block 123 and a part of a second groove 131 in between these tread blocks. Each one of the tread blocks 122, 123 is reasonably small. As shown on the right-hand side of Fig. 3b, to provide a larger first tread block 121, which can fit an insert 200, the part of the second groove 131 between the tread block 122, 123 (on the left-hand side of Fig. 3b) can be filled with the tread material to form a single larger first tread block 121 (on the right-hand side of Fig. 3b). Thus, the tread comprises the larger first tread block 121 shown on the right-hand side. Moreover, since a tread 120 is typically made up of repeating patterns, and the insert 200 does not need to be provided at all possible locations, at another location of the tread 120 there would be the smaller similar tread blocks 122, 123 and a part of the second groove 131 in between, shown on the left-hand side. The single tread block 121 is stiffer than the two tread blocks 122, 123 separately. Therefore, there would be a tendency of uneven wear without the first slits 210 around the insert 200, when the insert is being provided in the larger tread block 121.

Therefore, in an embodiment, a part of a second groove 131 is arranged between a second tread block 122 (which is one of the further tread blocks of the tread) a third tread block 123 (which is one of the further tread blocks of the tread). Moreover, a shape of a cross-section of the first tread block 121, to which the insert 200 has been arranged, is like a cross-section of a space S1 (i.e. an integral space) encompassing the second tread block 122 and the third tread block 123. The cross-section of the first tread block 121 is with a plane of which normal is normal to the tread at the location of the first tread block 121. The cross-section of the space S1 is with a plane of which normal is normal to the tread at the location of the space S1. An example of the cross-section of the space S1 is shown in Fig. 3b. However, the second groove 131 does not need to be completely filled, whereby the space S1, and likewise the first tread block 121, may have a different shape; even if the shape of the cross-section of the first tread block 121 is like a cross-section of a space S1, as in Fig. 3b. However, apart from the location of the second groove 131, the volume S1 is the (single, i.e. integral) smallest volume encompassing the second and third tread blocks 122, 123. Thus, the space S1 may be e.g. the smallest integral volume encompassing the second and third tread blocks 122, 123 and further encompassing at least part of that part of the second groove 131 that is arranged between the second tread block 122 and the third tread block 123. The space S1 may be e.g. the smallest integral volume encompassing the second and third tread blocks 122, 123 and further encompassing that part of the second groove 131 that is arranged between the second tread block 122 and the third tread block 123. The shape of the cross-section of the first tread block 121 may be identical to the shape of the cross-section of the space S1, as in Fig. 3b.

Furthermore, in an embodiment, a width w1 of a cross-section of at least one of the first slits 210 is 0.2 mm to 3 mm, preferably 0.4 mm to 0.7 mm. Reference is made to Fig. 1d. As shown therein, the cross-section of the first slit 210 is an intersection of the first slit 210 and a plane that is parallel to a tangential plane of the tread 110 at the location of the first slit 210. Moreover, the cross-section defines at least a shortest line that propagates from one edge of the cross-section through a centre of the cross-section to an opposite edge of the cross section. The width w1 is the measure of this shortest line, as readable from Fig. 1d. Notably, a shape of the cross-section of the first slit 210 may be a square, a rounded square, a parallelogram, a rounded parallelogram, a parallelogram of which two opposite edges are curved to have the shape of an arc of a circle (see Fig. 1d), a rectangle, a rounded rectangle, a polygon, a rounded polygon, an oval, or a circle. Some possible different shapes for the cross-section of the first slit 210 are shown in Figs. 1e1 to 1e5. These include a rectangle (Fig. 1e1, a rectangle being a polygon), an oval (Fig. 1e2), a pentagon (Fig. 1e3, a pentagon being a polygon), a circle (Fig. 1e4), and a triangle (Fig. 1e5, a triangle being a polygon). In case of e.g. a circle, the term width refers to the diameter of the circle. With reference to Fig. 1d, when the shape of the cross-section is substantially a parallelogram, the width w1 is the length of the shorter edge. In an embodiment, the first slits 210 are arranged such that the width w1 is directed parallel to a direction that is defined by a centre of the first slit and a centre of the insert 200 (see, e.g. Figs. 1b to 1d). Also, the width w1 in combination with the distance d1 and the depth D210 as discussed above has been found optimal in terms of properly softening the first tread block 121 so that the wear of the first tread block 121 is as fast as the wear of the other tread blocks 122, 123. A primary first slit 210 may have a similar cross section as a secondary first slit 210. In the alternative a primary first slit 210 may a cross section that is different from a cross-section of a secondary first slit 210. Preferably, all first slits 210 are shaped such that their cross-sections are alike.

Referring to Figs. 1b to 1d, in an embodiment, the first tread block 121 is provided with multiple second slits 220. Referring to Figs. 1d and 1e1 to 1e5 the second slits 220 are arranged further away from the insert 200 than the first slits 210. In other words, the second slits 220 are arranged a distance d3 (see Fig. 1d) apart from the insert 200, the distance d3 between the second slits 220 and the insert 200 being greater than the distance d1 defined above. The distance d3 may be, e.g. at least 1 mm greater than the distance d1.

Referring to Figs. 1d and 1e1 - 1e5, in an embodiment the second slits 220 are arranged around a first convex hull H1 that comprises all the first slits 210. Concerning the term first convex hull H1, as commonly defined, the first convex hull H1 is the smallest convex volume that encloses all the first slits 210. Moreover, what makes the first slits first slits and differentiates them from the second slits is the distance from the insert 200. Thus, in an embodiment, at least one of the first slits is arranged the distance d1 apart from the insert 200, and the first convex hull H1 is the smallest volume that encompasses all such slits (i.e. first slits 210) that are arranged the distance d1 apart from the insert 200. Moreover, at least some of the second slits 220 are arranged further away from the insert 200 than the first slits 210 such that the second slits 220 are arranged a distance d3 apart from the insert 200, the distance between the second slits 220 and the insert 200 being greater than the distance d1 defined above. In an embodiment, at least some of the second slits 220 are arranged a distance d2 apart from the first convex hull H1, as shown in Fig. 1d. Preferably, the distance d2 is 1 mm to 8 mm. This has been found to further improve the even wear of the first tread block. In an embodiment, all the second slits 220 are arranged around the first convex hull H1, as shown in Fig. 1d.

In an embodiment, cross sections of all the second slits 220 are similar. In an embodiment a cross section of a second slit is similar to a cross section of a first slit 210.

In an embodiment, a depth D220 of at least some of the second slits 220 is greater than or equal to a depth D210 of at least some of the first slits 210. More preferably, a depth D220 of at least some of the second slits 220 is at least 0.5 mm greater than a depth D210 of at least some of the first slits 210. What has been said about the width w1 applies likewise to the second slits 220. Thus, in an embodiment, a width w2 of a cross-section of at least one of the second slits 220 is 0.2 mm to 3 mm, preferably 0.4 mm to 0.7 mm. Reference is made to Fig. 1d. As shown therein, the cross-section of the second slit 220 is an intersection of the second slit 220 and a plane that is parallel to a tangential plane of the tread 110. Moreover, the cross-section defines at least a shortest line that propagates from one edge of the cross-section through a centre of the cross-section to an opposite edge of the cross section. The width w2 is the measure of this shortest line, as readable from Fig. 1d. Notably, a shape of the cross-section of the second slit 220 may be a a square, a rounded square, a parallelogram, a rounded parallelogram, a parallelogram of which two opposite edges are curved to have the shape of an arc of a circle (see Fig. 1d), a rectangle, a rounded rectangle, a polygon, a rounded polygon, an oval, or a circle. Some possible different shapes for the cross-section of the second slit 220 are shown in Figs. 1e1 to 1e5. Also, the width w2, preferably in combination with the width w1, the distances d1 and d2 and the depths D210, D220 as discussed above, has been found optimal in terms of properly softening the first tread block 121 so that the wear of the first tread block 121 is as fast as the wear of the other tread blocks 122, 123. In an embodiment, the second slits 220 are arranged such that the width w2 is directed parallel to a direction that is defined by a centre of the second slit and a centre of the insert 200 (see, e.g. Figs. 1b to 1d).

Moreover, multiple second slits 220 are arranged around the insert 200 instead of a single hole surrounding the insert 200 to increase a bending stiffness of the rubber material around the insert 200; namely, if a single narrow slit fully encircling the inset 200 (and, optionally the first convex hull H1) was used, the material arranged inside the single narrow slit could easily bend in a tangential direction of the tread 110. In this way, the material of the first tread block 121 in between the second slits 220 prevents excessive bending. Moreover, as detailed above, in an embodiment the multiple second slits 220 are arranged around the first convex hull H1.

Referring to Fig. 1b, in an embodiment, the tyre 100 comprises - in addition to the insert 200, which may serve as a solid wear indicator - a wear indicator 240 formed as a hole 241 or holes 241, 242, 243 in the tread 110. Preferably, the wear indicator 240 is provided in the first tread block 121. Thus, the wear indicator 240 is arranged at most 50 mm apart from the insert 200. This also ensures that the wear indicator 240 can be manufactured using the same part 300 for a mould that is used to manufacture the blind hole 202 for the insert 200. In the wear indicator 240, a cross-section of at least one of the holes 241, 242, 243 resembles an Arabic numeral. For example, as shown in Fig. 1b, a cross section of a first hole 241 resembles the Arabic numeral "4", a cross section of a second hole 242 resembles the Arabic numeral "6", and a cross section of a third hole 243 resembles the Arabic numeral "8". Referring to Figs. 2a and 2b, the first hole 241 is deeper that the second hole 242, which is deeper than the third hole 243. Naturally, the numerals 4, 6, and 8 are examples of a wear indicator. In the alternative, the numerals 3, 5, and 7 could be shown in the wear indicator 240 using similar principles. Likewise, e.g. the numerals 2, 3, 4, 5, 6, 7, and 8 could be shown in the wear indicator 240 using similar principles.

Therefore, in an embodiment, the wear indicator 240 comprises a first hole 241, a cross-section which resembles a first Arabic numeral, and a second hole 242, a cross-section which resembles a second Arabic numeral, such that the first hole 241 is deeper than the second hole 242, and the first Arabic numeral indicates a smaller number than the second Arabic numeral. In this way the Arabic numeral(s) can be used show the depth D130 of the groove 130. As an example, in an unworn tyre, the third blind hole 243 is present (as well as the second and the first blind holes 242, 241), and it resembles the number eight, which may indicate a groove depth of eight milli metres. However, when the tread wears, at some point the shallowest hole, i.e. the third hole 243, wears off completely, while the deeper holes 242, 241 remain in the wear indicator 240. At such a point of wear, the number 8 is not anymore visible, but instead the number 6 (as well as the number 4) can be seen from as the cross section of the second hole 242. And so on: the number 6 wears off and only the number 4 remains. In this way, the set of holes can be used as a wear indicator indicating a groove depth of the tread.

Preferably, the insert 200 is arranged to such a location of the tread that is not close to a boundary B1, B2 of the tread. Naturally, when the tyre comprises multiple inserts, some of them may be arranged near a boundary B1, B2, but preferably at least one of the inserts 200 is arranged in a central region CR of the tread. This has the effect that typically the central region CR indicates the wear of the tread 110 in a most reliable manner. Therefore, and with reference to Fig. 3, in an embodiment, the insert 200 is arranged in a central region CR of the tread 110 of the tyre 100. The central region CR of the tread 110 of the tyre 100 is arranged between a first shoulder area SR1 and a second shoulder area SR2. Like the central region CR, the first shoulder area SR1 and the second shoulder area SR2 are parts of the tread 110. The first shoulder area SR1 comprises a first boundary B1 of the tread and the second shoulder area SR2 comprises a second boundary B2 of the tread 110, the second boundary B2 being opposite the first boundary B1. In the tyre, these parts CR, SR1, SR2 extend circumferentially around the tyre 100. The central region CR as discussed above is defined so that a width WSR1 of the first shoulder area SR1 is at least 20 % of a width W110 of the tread 110, and a width WSR2 of the second shoulder area SR2 is at least 20 % of the width W110 of the tread 110. Thus, a width of the central region CR, in which the insert 200 is provided, is at most 60 % of the tread 110. However, preferably the insert 200 is provided in a narrower central region CR. Thus, in a preferable embodiment, a width WSR1 of the first shoulder area SR1 is at least 30 % of a width W110 of the tread 110, a width WSR2 of the second shoulder area SR2 is at least 30 % of the width W110 of the tread 110, and the insert 200 is arranged in the central region CR that is arranged between the first and second shoulder regions SR1, SR2. Thus, preferably, a width of the central region CR, in which the insert 200 is provided, is at most 40 % of the tread 110.

As will be detailed below, preferably (but not necessarily), the blind hole 202 for the insert 200 as well as the first slits 210 and, if applicable the second slits 220, are made with a part 300 for a mould 400, the part 300 for a mould having been made by an additive manufacturing technology. Thus, in an embodiment, the tyre comprises markings 230 around the insert 200 (see Fig. 1d). The markings 230 are indicative of a part of the first tread block 121 around the insert 200 having been manufactured by a part 300 of a mould 400 that has been made by an additive manufacturing technology. Such markings 230 may be e.g. lines (as shown in Fig. 1d) indicative of the part 300 for the mould 400 having a concave first surface 311 the first surface 311 having been made by adding partial layers or lines of material onto each other. In this way, the concave first surface 311 is not entirely smooth but has tiny steps corresponding to the resolution of the additive manufacturing technology. The resolution may be expressible in DPI (dots per inch). In the present invention, also the orientation of the part 300 for the mould relative to a direction of printing affects the height of these tiny steps. In general, one of the most distinctive features of additively manufactured parts is the presence of visible layer lines or striations. These lines are a result of the layer-by-layer construction process and can often be seen on the surface of the part, especially if it has not been post-processed. Moreover, the surface finish of additively manufactured parts can vary depending on the technology used. Parts produced by powder bed fusion processes (like Selective Laser Melting, SLM and Direct Metal Laser Sintering, DMLS) may have a slightly rough or grainy texture due to the metal powder. Binder jetting parts may also have a rough surface.

Referring to Fig. 1a, a tyre 100 may comprise several inserts 200. However, as is obvious, a tyre 100 does not need to contain any inserts. From the point of view of product variability, it is beneficial that the tyre 100 comprises the insert 200 only in certain product lines, while in some other product lines the tyre (i.e. another tyre) does not comprise the insert 200 but is otherwise like the tyre 100 having the insert 200.

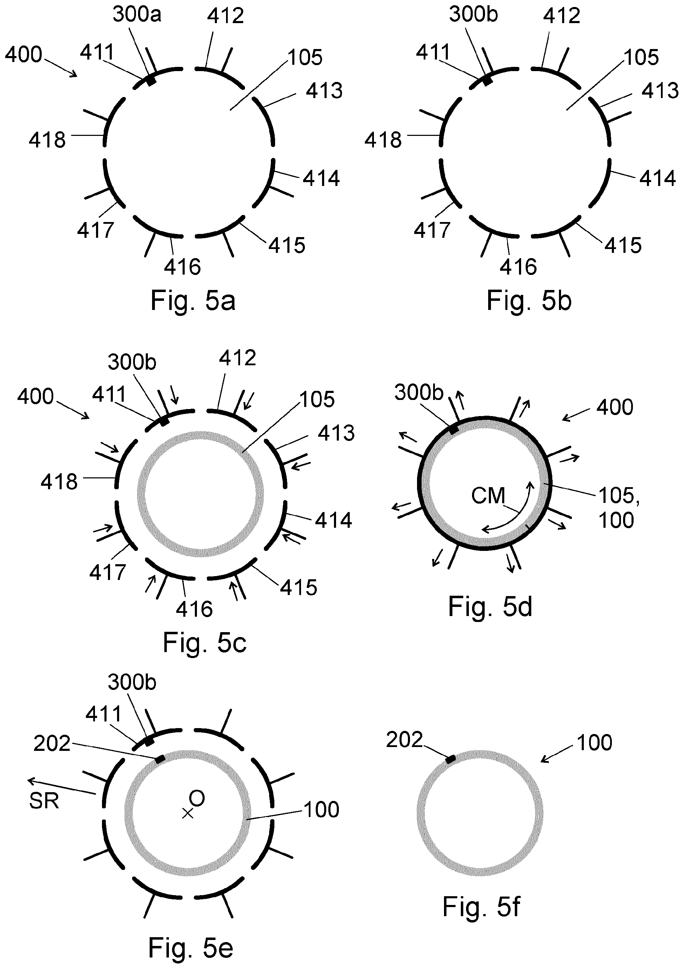

With reference to Figs. 5a to 5f, particularly 5c to 5f, typically a tyre 100 is manufactured by:
- arranging a green tyre 105 in an open mould 400 (as in Fig. 5c),
- closing the mould 400 and curing the green tyre 105 to form the tyre 100 (Fig. 5d),
- opening the mould 400 (Fig. 5e), and
- removing the tyre 100 from the mould (Fig. 5f).

The curing of the green tyre 105 is accomplished at an elevated temperature, as well known in the art. Typically, the mould 400 comprises segments 411, 412, 413, 414, 415, 416, 417, 418, which are movable in a radial direction of the tyre 100 or the green tyre 105 to open and close the mould 400. Arrows in Fig. 5c show the closing of the mould 400 and arrows in Fig. 5d show the opening of the mould 400.

As shown in Figs. 5b to 5f the mould 400, in particular a first segment 411 of the mould 400, comprises a part 300b for forming a blind hole 202 to the tyre 100, in particular to a tread 110 of the tyre 100. The part 300b protrudes from a surface of the mould 400 so that when the mould 400 is closed, at least a part of the part 300b penetrates in to the green tyre 105, and when the tyre is cured and the mould 400 opened, the part 300b is removed from the tyre 100, whereby a blind hole 202 remains in the tyre at the point from which the part 300b was removed. The insert 200 can then be inserted into the blind hole 202; or a part of the insert 200 can then be inserted into the blind hole 202 the remaining part of the insert 200 protruding from the tread 110.

The mould 400 is typically mechanically reasonably complex, whereby a mould 400 is reasonably expensive. Naturally, it could be possible to replace at least one mould segment, such as the first mould segment 411 of Fig. 5a to produce another type of a tyre. However, also a mould segment is mechanically complex and, therefore, reasonably expensive. Moreover, storing spare mould segments (or moulds) requires a lot of space.

The inventors have found that for making different tyres for different product lines as detailed above, a removably fixable part 300 for the mould 400, or more for the mould segment 411, can be used. In particular, as shown in Fig. 5a, at a first period of time, the mould may comprise a first removably fixable part 300a fixed to a mould segment 411 to form first type of structures to the tread 110 of a tyre 100 in the manner discussed above. The first removably fixable part 300a may e.g. form sipes 150 to a tread block of a tyre without a blind hole 202 for an insert 200. However, after having made such tyres, the first removably fixable part 300a of the mould is detached from the mould segment 411, and a second removably fixable part 300b for the mould 400 is fixed to the mould 400, particularly to the mould segment 411, as shown in Figs. 5a and 5b. The second removably fixable part 300b for the mould 400, which by fixing becomes a part of the mould 400, can be used to produce a hole 202 for an insert 200. Naturally, even if not shown, the first removably fixable part 300a for the mould can be such a part that a blind hole 202 can be manufactured and the second removably fixable part 300b for the mould can be such a part that sipes (but not a blind hole 202) can be manufactured. Moreover, both the first and second removably fixable parts 300a, 300b can be such parts that a blind hole 202 can be manufactured, however, they may have some other differences. E.g. the first removably fixable part 300a can be designed to form a blind hole for a stud and the second removably fixable part 300b can be designed to form a blind hole for an insert serving for the purpose of a solid wear indicator. As shown in these figures, the parts 300a, 300b are detached/attached to/from a mould segment 411.

Figs. 5a to 5f show schematically steps of a method for manufacturing a tyre 100. In line with the above, an embodiment of a method for manufacturing a tyre comprises unfastening a first part 300a from a mould 400, which mould is suitable for manufacturing a tyre. In an embodiment, the first part 300a is unfastened from a mould segment 411. Thus, an embodiment comprises unfastening a first part 300a from a mould segment 411 of a mould 400, the mould being is suitable for manufacturing a tyre (Fig. 5a). The method comprises fastening a second part 300b to the mould 400, or to the mould segment 411, to the same location from which the first part 300a was unfastened (Fig. 5b). Moreover, the method comprises arranging a green tyre 105 into the mould 400 (and closing the mould 400, Figs. 5c-5d) and vulcanizing the green tyre 105 in the mould to form the tyre 100 (Fig. 5d). The method further comprises opening the mould 400 (Figs. 5d-5e) and removing the tyre 100 from the mould 400 (Fig. 5f). The first part 300a or the second part 300b is a part 300 for a mould 400 for manufacturing a tyre 100. The part 300 for the mould 400 is configured to be removably fixed to the mould 400. Details of a part 300 for the mould 400 will be disclosed in more detail below.

Such a method has at least the following advantages:
- no need to get more moulds because of the different product lines,
- no need to store extra moulds and the resulting storage costs,
- no actual need to change the whole mould when changing between different product lines.

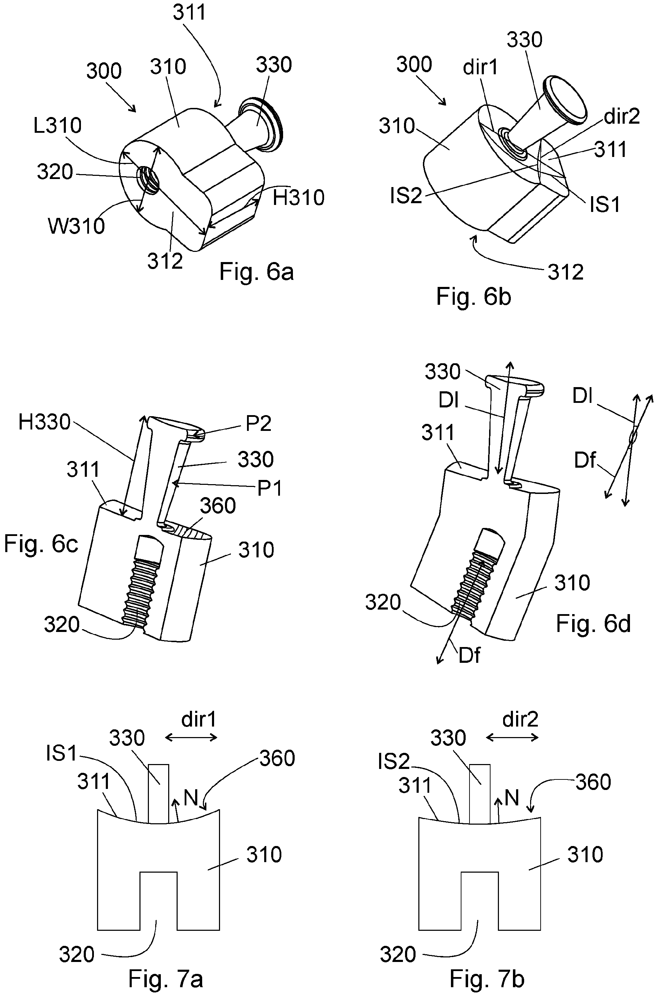

Figs. 6a and 6b show different views of a part 300 for a mould 400 for manufacturing a tyre 100. The part 300 is configured to be removably fixed to the mould 400. The part 300 is configured to be removably fixed to a mould segment 411 of the mould 400. The part 300 for the mould comprises a body 310 having a first surface 311 and a second surface 312, which is opposite to the first surface 311. The part 300 can be used as the first part 300a or the second part 300b as discussed above in the context of the method (see Figs. 5a and 5b).

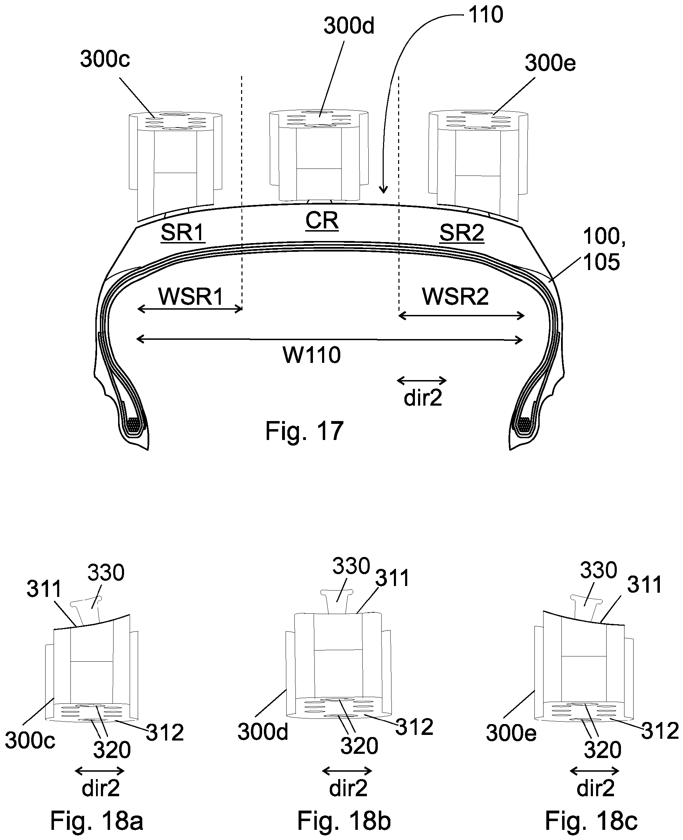

For fixing the part 300 to the mould 400 and for detaching the part 300 from the mould 400, the part 300 comprises a fixing means 320 for attaching the body 310 to the mould 400 for manufacturing the tyre 100. The fixing means 320 is arranged on the second surface 312. For manufacturing a blind hole 202 to the tyre 100, the part 300 comprises a post 330 protruding from the first surface 311. The post 330 is configured to form a blind hole 202 to a first tread block 121 of the tyre 100 so that an insert 200 can be inserted in the blind hole 200. The insert 200 may be, e.g., a solid wear indicator or a stud. In an embodiment, the post 330 protrudes from the first surface 311 such that a longitudinal direction of the post 330 forms a normal of the first surface 311 at the location of the post 330. Reference is made at least to Figs. 6b-6d and 18a-18c.

Referring to Fig. 6b, the first surface 311 is curved in a first direction dir1 and in a second direction dir2 that is perpendicular to the first direction dir1 such that the first surface 311 is concave, whereby the first surface 311 is configured to form a part of a tread 110 of a tyre 100. When the first surface 311 is curved in the first direction dir1 and in the second direction dir2, the first surface 311 of the part 300 can be designed to form such a part of the tread 100 that is curved in these two directions. In particular, a tread 110 of a tyre is normally curved in two mutually perpendicular directions: the circumferential direction and the transversal direction. Thus, if the first surface would be flat, the part would not only make a blind hole but would also form a flat area near the blind hole. Such a flat area would be visible to a naked eye and could be considered unattractive to a customer. Moreover, such a flat area could affect the local wear of the tread near the insert 200 or the blind hole 202. Thus, the first surface 311 is curved in the two directions dir1, dir2.

A height H330 of the post 330 is at least 6 mm. This ensures that an insert 200 can be inserted suitably deep into the blind hole 202 formed by the post 300. As shown in Fig. 6c, the height H300 of the post is defined from the first surface 311 to a tip of the post 300, in a longitudinal direction of the post 300.

As detailed above, in an embodiment, the part 300 is attachable to a mould 400. In an embodiment, the part 300 is attachable to a mould segment 411 of a mould 400. Thus, the part 300 is much smaller than a mould segment 411 as such. Even if detailed measures of the part 300 will be given later, it is noted that an area of the first surface 311 is in an embodiment at most 1500 mm², i.e. at most 15 cm². In contrast, an area of a tread 110 of a tyre may be e.g. of the order of 60 dm², i.e. more than 400 times greater than first surface 311. As readable from Figs. 5a to 5f, the mould may comprise e.g. eight segments, whereby an area of such a part of a mould segment that is configured to form a part of the tread may be e.g. 5 to 10 dm², i.e. 500 to 1000 cm². These numbers also indicate the benefits for using a replaceable part 300 for the mould 400, the part 300 being several times smaller than the mould 400 or the mould segment 411. Furthermore, the mechanical complexity of the part 300 is much less than the mechanical complexity of the mould segment 411 or the whole mould 400, which shows in manufacturing costs of the part 300 and the mould segment 411.

The idea of using a removably fixable part 300 in the mould 400 for manufacturing a tyre 400 can be used also in a wider context than just for manufacturing a tyre 100 comprising the first slits 210 and the blind hole 202 for the insert 200 as detailed above. For this reason, the part 300 does not need to comprise first pins around the post 330. However, as will be detailed below, in an embodiment, the part 300 comprises first pins 340 for forming the first slits 210 into the tyre 100.

In an embodiment, the fixing means 320 comprises a hole that is provided with threads. Reference is made to Fig. 6c. Such a part can be fixed/detached to/from the mould 400 (or mould segment 411) e.g. by using a bolt. In an embodiment, the fixing means 320 comprises an axle that is provided with threads (not shown). Such a part can be fixed/detached to/from the mould 400 (or mould segment 411) e.g. by using a nut.

Preferably, the fixing means 320 comprises a hole that is provided with threads or an axle that is provided with threads, whereby the hole or the axle defines a fixing direction. The fixing direction is the direction of the central axis of the hole or the central axis of the axle of the fixing means 320. Moreover, preferably the fixing direction is parallel to a longitudinal direction of the post 330, as shown in Figs. 6a-6c, 7a-7b, 8a-8b, and 9a-9b.

However, the fixing direction Df does not need to be parallel to a longitudinal direction Dl of the post 330. As an example, the fixing direction Df (see Fig. 6d) may form four angles with the longitudinal direction Dl of the post 330, as two non-parallel lines crossing each other will form four angles on a plane defined by these two lines, two of the four angles being equal with each other and the other two also being equal to each other. The four angles are also shown in Fig. 6d at the point where the directions Dl and Df are crossing each other. Moreover, the smallest of these angles is, preferably, at most 20 degrees. The angle may be greater than zero, e.g., in such parts 300 that are configured to be used further away from the tyre equator, as shown in Figs. 18a and 18c. However, depending on mechanical design, the angle may vary.

When the fixing means 320 comprises threads, in the embodiment of the method shown in Figs. 5a to 5f:
- the fixing means of the first part 300a comprises a hole that is provided with threads or an axle that is provided with threads and
- the fixing means of the second part 300b comprises a hole that is provided with threads or an axle that is provided with threads, respectively. Moreover, the embodiment of the method comprises
- loosening a bolt or a nut to unfasten the first part 300a from the mould 400, and
- fastening the second part 300b to the mould 400 with a bolt or a nut.

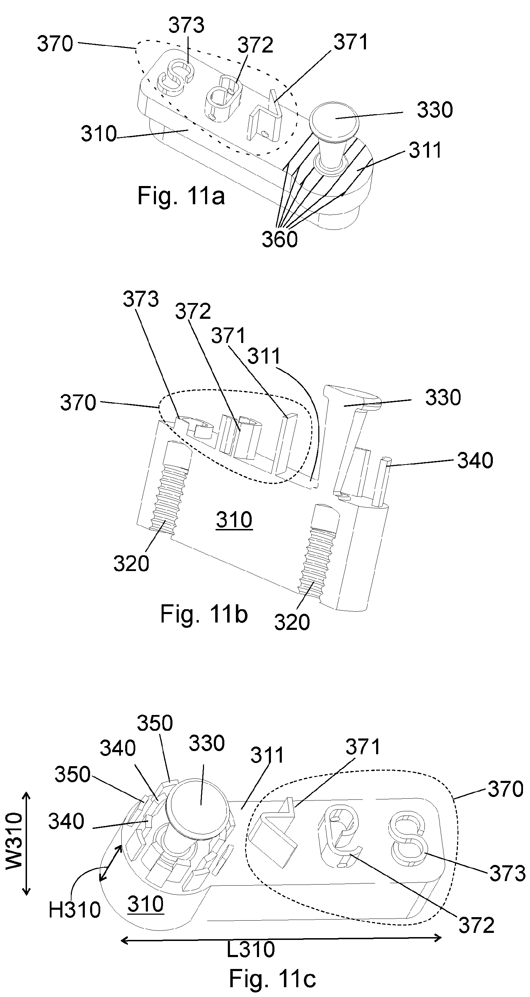

As for the dimensions of the part 300, the body 310 thereof has a length L310, a width W310, and a height H310, as shown in Figs. 6a and 11c. The length L310 of the body 310 may be e.g. 6 mm to 80mm, such as 8 mm to 65 mm. The width W310 of the body 310 may be e.g. 6 mm to 30 mm, such as 8 mm to 18 mm. A ratio of the length L310 to the width W310 (the ratio L310/W310) is preferably in the range 1.0 to 4.0, more preferably 1.0 to 3.0. The height H310 of the body 310 may be e.g. 2 mm to 30 mm, such as 7 mm to 15 mm. As for the height H310 of the body 310, the post 330, the pins 340, 350, and the blades 371, 372, 373 are considered to protrude from the body 310 (i.e. from the first surface 311) and do not therefore count to the height H310 of the body 310. This applies also to the fixing means 320, if the fixing means is such that it protrudes from the body 310, e.g. if the fixing means 320 is an axle.

Concerning the degree of curvature of the first surface 311, referring to Figs. 6b, 7a, and 7b, a first intersection IS1 of the first surface 311 and a first plane that is defined by the first direction dir1 and a normal N of the first surface 311 has a first radius of curvature. The first intersection IS1 is shown in Figs. 6b and 7a. Moreover, a second intersection IS2 of the first surface 311 and a second plane that is defined by the second direction dir2 and a normal N of the first surface 311 has a second radius of curvature. These first and second radii of curvature define the degrees of curvature of the first surface 311 in the two directions.

Concerning the degree of curvature of the first surface 311, it is noted that a diameter of a tyre 100 in a circumferential direction is typically 550 mm to 885 mm, more typically 570 mm to 885 mm, and most typically 600 mm to 880 mm. Thus, a radius of curvature of the tyre in the circumferential direction is typically 275 mm to 445 mm (with the accuracy of 5 mm), more typically 285 mm to 445 mm, and most typically 300 mm to 440 mm. As detailed above, a purpose of making the first surface 311 of the part 300 curved in the first direction dir1 is to make the part of the tread formed by the first surface 311 to conform with the rest of the tread. Therefore, in an embodiment, the first radius of curvature (of the first surface 311 as defined above) is 275 mm to 445 mm (with the accuracy of 5 mm as above), preferably 285 mm to 445 mm, and more preferably 300 mm to 440 mm.

Moreover, in a typical tyre 100, a radius of curvature of the tread 110 in a transversal direction, which is perpendicular to the circumferential direction, is 50 mm to 2800 mm, more typically 110 mm to 2250 mm. Thus, in an embodiment, the second radius of curvature (of the first surface 311 as defined above) is 50 mm to 2800 mm, preferably 110 mm to 2250 mm. As shown in Figs. 17 and 18a-18c, a proper value for the second radius of curvature may depend on the location of the tread, in which the part 300 is intended to be used.

These radii of curvature concern also the method for manufacturing the tyre shown in Figs. 5a to 5d. Namely, these measures relate to the method in such a way that the first direction dir1 of the part 300 for the mould 400 is directed in the circumferential direction CM of the mould 400. Thus, in an embodiment of the method, the part 300 has the first and second radii of curvature as disclosed above. Moreover, the method comprises fixing the first part 300a or the second part 300b, whichever has the fixing means 320 and the radii of curvature, to the mould 400 (e.g. a mould segment 411 of the mould 400) in such a way that the first direction dir1 is a circumferential direction CM of the mould 400 for the tyre, and the second direction dir2 is a transversal direction of the mould 400 for the tyre.

This is illustrated in detail in Figs. 17, 18a, 18b, and 18c. Fig. 17 shows schematically three parts 300c, 300d, and 300e for the mould 400. The part 300c is configured to form a part of the tread in a first shoulder region SR1. The part 300e is configured to form a part of the tread in a second shoulder region SR2. The part 300d is configured to form a part of the tread in a central region CR. Notably the size of each of the three parts 300c, 300d, and 300e is exaggerated relative to the size of the tyre 100 (or the green tyre 105). Figure 17 further shows a half of a cross-section of the tyre 100 (or the green tyre) a plane of the cross-section comprising a radial direction of the (green) tyre 100, 105 and the transversal direction (i.e. a direction of an axis of rotation of the tyre). Naturally any one of the three parts 300c, 300d, and 300e or all or some of them may be used (e.g. as the part 300b of Figs. 3b to 5f), when manufacturing the tyre 100 as discussed in more detail above and with reference to Figs. 5a to 5f.

Figs. 18a to 18c show the parts 300c, 300d, 300e of Fig. 17, respectively. Each one of the parts 300c, 300d, 300e comprises the first surface 311, the post 330 protruding from the first surface 311, and the fixing means 320 arranged on a second surface 312 that is opposite the first surface 311. The first surface 311 is curved in the first direction dir1 (not shown in Figs. 18a to 18c as this direction is substantially perpendicular to the plane of the figure) and in the second direction dir2. The second direction is also shown in Fig. 17. Figs. 17 and 18a to 18c in combination show, how the part 300 is, in an embodiment of the method, arranged in the mould 400.

Figures 18a to 18c also show that if the part 300 is to be used at a central region CR of the tyre (or the mould 400), like the part 300d of Fig. 18b, a radius of curvature of the first surface 311 in the second direction dir2 may be much more than if the part 300 is to be used at a first or second shoulder region SR1, SR2 of the tyre, as the part 300c of Fig. 18a of the part 300e of Fig. 18c. Notably, a large radius of curvature indicates a small degree of curving.

In some cases, particularly when the insert 200 that is inserted into the blind hole 202 formed by the post 330 of the part 300, it is beneficial that the blind hole 200 is laterally surrounded by the first slits 210 as detailed in connection with the tyre 100 above (for the first slits 210 and the second slits 220, see Figs. 1b to 1d).

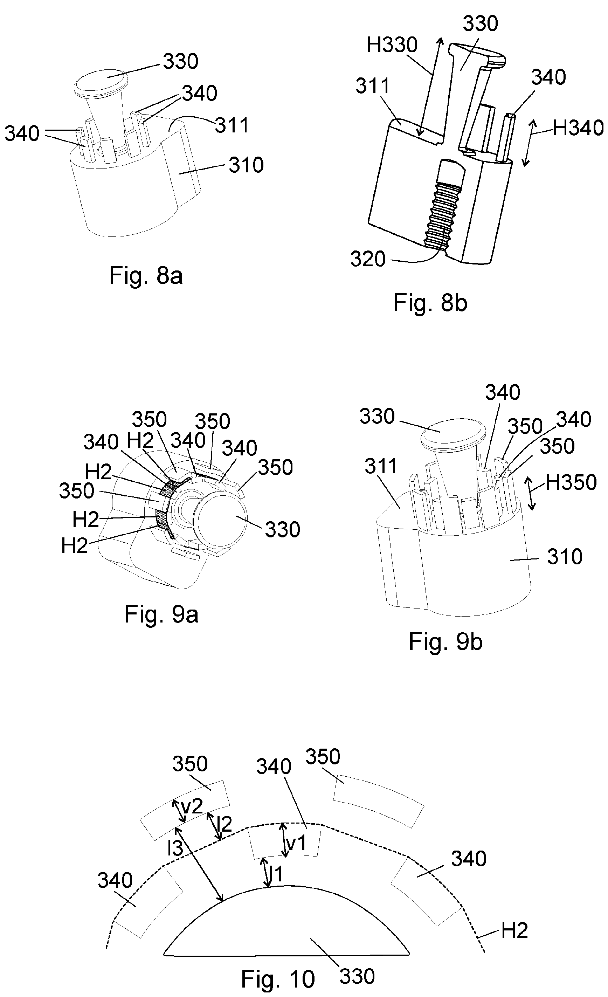

To form the first slits 210 in a similar manner as the post 330 forms the blind hole 202, in an embodiment, the part 300 comprises first pins 340 arranged around the post 330. Such first pins 340 are shown in Figs. 8a and 8b without second pins. Such first pins 340 are shown in Figs. 9a and 9b together with second pins 350. In an embodiment, all the first pins 340 are arranged equally far away from the post 330. The first pins 340 will form first slits 210 that are geometrically congruent with the first pints 340. Thus, a shape of a cross-section of the first pins 340 may be a square, a rounded square, a parallelogram, a rounded parallelogram, a parallelogram of which two opposite edges are curved to have the shape of an arc of a circle (see Fig. 1d), a rectangle, a rounded rectangle, a polygon, a rounded polygon, an oval, or a circle. Some possible different shapes for the cross-section of the first slit 210 are shown in Figs. 1e1 to 1e5. These include a rectangle (Fig. 1e1, a rectangle being a polygon), an oval (Fig. 1e2), a pentagon (Fig. 1e3, a pentagon being a polygon), a circle (Fig. 1e4), and a triangle (Fig. 1e5, a triangle being a polygon). The cross-section of the first pin 340 is with a plane of which normal is a longitudinal direction of the first pin 340.

A height H340 of at least some of the first pins 340 is at least 20 % of the height H330 of the post 330 and less than the height H330 of the post 330. Preferably, height H340 of at least some of the first pins 340 is at least 30 % of the height H330 of the post 330. The height H340 of a first pin 340 is shown in Fig. 8b and is measurable from the first surface 311 to a tip of the first pin 340 in a direction of length of the first pin 340. Moreover at least some of the first pins 340 are arranged 1 mm to 5 mm apart from the post 330. More specifically, Fig. 10 shows a part of a cross section of the post 330 and some of the first pins 340 and some of the second pins 350 in line with the embodiment shown in Figs. 9a and 9b. The cross section is taken at a location that is in between the first surface 311 and a tip of the shortest pin (shortest of the first 340 and second pins 350). Moreover, a normal of the cross-section is a longitudinal direction of the pin 330. Referring to Fig. 10 a distance l1 is arranged between the post 330 and a first pin 340. As discussed above, in an embodiment, the distance l1 is 1 mm to 5 mm, whereby the first pins 340 are arranged apart the distance d1 from the post 330. The distance d1 may vary depending on an exact location of the plane defining the cross section, e.g. when the post 330 has a tapering shape. However, at least at s certain height, what has been said applies.

Furthermore, in an embodiment, a width v1 of a cross-section of at least one of the first pins 340 is 0.2 mm to 3 mm, preferably 0.4 mm to 0.7 mm. Reference is made to Fig. 10. Shown therein are cross-sections of the first pins as discussed above. A cross-section of a first pin 340 defines at least a shortest line that propagates from one edge of the cross-section through a centre of the cross-section to an opposite edge of the cross section. The width v1 is the measure of this shortest line, as readable from Fig. 10. Notably, a shape of the cross-section of the first pin 340 may be a square, a rounded square, a parallelogram, a rounded parallelogram, a parallelogram of which two opposite edges are curved to have the shape of an arc of a circle (see Fig. 10), a rectangle, a rounded rectangle, or a circle. Thus, in case of e.g. a circle, the term width refers to the diameter of the circle. With reference to Fig. 10, when the shape of the cross-section is substantially a parallelogram, the width v1 is the length of the shorter edge. In an embodiment, the first pins 340 are arranged such that the width v1 is directed parallel to a direction that is defined by a centre of the first pin and a centre of the post 330 (see, e.g. Fig. 10).

Also, the width v1, the distance l1, and the height H340 have the effect of forming suitable first slits 210 characterized by the corresponding measures w1 (shown in Fig. 1d, corresponding to v1 of Fig. 10), d1 (shown in Fig. 1d, corresponding to l1 of Fig. 10), and D210 (shown in Fig. 2b, corresponding to H340 of Fig. 8b). Preferably, all the first pins 340 are substantially parallel such that they all have substantially the same longitudinal direction and a direction of a length of the post 330 is substantially parallel to a direction of a length of the first pins 340. Reference is made to Figs. 8a and 8b. Moreover, the longitudinal directions of the first pins may be normal to the first surface 311 the location of the first pin 340. As the direction of the normal depends on location, this clarifies the term "substantially parallel" above. Moreover, the longitudinal direction of the post 330 may be normal to the first surface 311 the location of the post 330. Also this clarifies the term "substantially parallel" above. However, it is also possible that the longitudinal direction of the post 330 is normal to the first surface 311 at the location of the post, and the longitudinal directions of the first pins are exactly parallel to the longitudinal direction of the post.

To form the second slits 220, in an embodiment, the part 300 comprises second pins 350. Referring to Figs. 9a and 10, the second pins 350 are arranged around the post 330 further apart from the post 330 than the first pins 340. In other words, the second pins 350 are arranged a distance l3 (see Fig. 10) apart from the post 330, the distance l3 between the second pins 350 and the post 330 being greater than the distance l1 defined above. The distance l3 may be, e.g. at least 1 mm greater than the distance l1. Configurations of the first and second pins 340, 350 are also readable from the figures 1e1-1e5 concerning a part of a tread.

In an embodiment, the second pins 350 are arranged around a second convex hull H2 comprising all the first pins 340. Only a part of the second convex hull H2 is depicted in Figs. 9a and 10. Concerning the term second convex hull H2, as commonly defined, the second convex hull H2 is the smallest convex volume that encloses all the first pins 340. Moreover, what makes the first pins and differentiates them from the second pins is the distance from the post 330. Thus, in an embodiment, at least one of the first pins is arranged the distance l1 apart from the post 330, and the second convex hull H2 is the smallest volume that encompasses all such pins (i.e. first pins 340) that are arranged the distance l1 apart from the post 330. This applies at least on a cross-sectional plane, a normal of the plane being in a longitudinal direction of the post 330. Moreover, at least some of the second pins 350 are arranged a distance l2 apart from the second convex hull H2, as shown in Fig. 10. The distance l2 is 1 mm to 8 mm. Thus, at least some of the second pins 350 are arranged 1 mm to 8 mm apart from the second convex hull H2 comprising all the first pins 340. In an embodiment, all the second pins 350 are arranged around the second convex hull H2 comprising all the first pins 340.

In an embodiment, a width v2 of a cross-section of at least one of the second pins 350 is 0.2 mm to 3 mm, preferably 0.4 mm to 0.7 mm. A cross-section of a second pin defines at least a shortest line that propagates from one edge of the cross-section through a centre of the cross-section to an opposite edge of the cross section. The width v2 is the measure of this shortest line, as readable from Fig.10. In an embodiment, the second pins 350 are arranged such that the width v2 is directed parallel to a direction that is defined by a centre of the second pin 350 and a centre of the post 330 (see, e.g. Fig. 10).

In an embodiment, a height H350 of at least some of the second pins 350 is greater than or equal to a height H340 of at least some of the first pins 340. In an embodiment, a height H350 of at least some of the second pins 350 is at least 0.5 mm greater than a height H340 of at least some of the first pins 340. The height H350 of a second pin 350 is shown in Fig. 9b and is measurable from the first surface 311 to the tip of the second pin 350 in a direction of a length of the second pin 350. Preferably, all the second pins 350 are substantially parallel such that they all have substantially the same longitudinal direction and a direction of a length of the post 330 is substantially parallel to a direction of a length of the second pins 350. More preferably also all the first pins 340 are substantially parallel such that they all have substantially the same longitudinal direction that is substantially parallel to the direction of length of the post 330. Reference is made to Figs. 9a and 9b. What has been said above about the term "substantially parallel" applies. Moreover, the longitudinal directions of the second pins 250 may be normal to the first surface 311 at the location of the second pins 350. However, it is also possible that the longitudinal direction of the post 330 is normal to the first surface 311 at the location of the post, and the longitudinal directions of the second pins are exactly parallel to the longitudinal direction of the post.

In an embodiment, the part 300 comprises a blade arrangement 370 for making a wear indicator 240 to the tyre 100 in the mould 400. Reference is made to Figs. 11a to 11c. In Fig. 11a the blade arrangement 370 is comprised by a part 300 for the mould 400, the part 300 comprising the post 330 and not comprising the pins 340, 350. In Fig. 11b the blade arrangement 370 is comprised by a part 300 for the mould 400, the part 300 comprising the post 330 and first pins 340, and not comprising the second pins 350. In Fig. 11c the blade arrangement 370 is comprised by a part 300 for the mould 400, the part 300 comprising the post 330, the first pins 340, and the second pins 350.

The blade arrangement 370 comprises at least a first blade 371. The first blade 371 is arranged at most 50 mm apart from the post 330. A cross-section of the first blade 371 resembles a mirror-image of a first Arabic numeral. The cross-section is the cross section of the first blade 371 with a plane of which normal is to the direction of height of the first blade 371. Preferably the direction of height of the first blade 371 is parallel to a direction of the height H330 of the post 330. As an example, in Figs. 11a to 11c, a cross-section of the first blade 371 resembles a mirror-image of the Arabic numeral "4". When the part 300 is used as the second part 300b in the way shown in Figs. 5a to 5f, the first blade 371 will form a first hole 241 to the tread 110 of the tyre, a cross-section of the first hole 241 resembling the Arabic numeral "4". In particular, the mould of Fig. 11c can be used to form the wear indicator 240 of Fig. 1b. Even if the first surface 311 of the part 300 of Fig. 11c has edges, because the first surface 311 is curved in two directions, the part of the tread shown in Fig. 1b is regularly curved also in the area limited by the edges of the first surface 311. Moreover, when the part 300 is fixed to the mould 400 such that the edges of the first surface 311 are at the same level as the other part of the mould 400 near the edge of the first surface 311, the tread 110 has a smooth transition from the insert 200 to the region outside the second slits 220.

In a preferable embodiment, the blade arrangement 370 comprises a second blade 372. A cross-section of the second blade 372 resembles a mirror-image of a second Arabic numeral. For example, a cross-section of the second blade 372 shown in Figs. 11a to 11c resembles a mirror-image of the Arabic numeral "6". What has been said about the plane of the cross-section in the context of the first hole 241 applies to the second hole 242 *mutatis mutandis.* Moreover, the first blade 371 is higher than the second blade 372, and the first Arabic numeral indicates a smaller number than the second Arabic numeral. Reasons for these depths and the numerals have been discussed in the context of the wear indicator 240 of the tyre 100.

As shown in Figs. 11a to 11c, in an embodiment, the blade arrangement 370 comprises a third blade 373. A cross-section of the third blade 373 resembles a mirror-image of a third Arabic numeral. For example, a cross-section of the third blade 373 shown in Figs. 11a to 11c resembles a mirror-image of the Arabic numeral "8". What has been said about the plane of the cross-section in the context of the first hole 241 applies to the third hole 243 *mutatis mutandis.* Moreover, the second blade 372 is higher than the third blade 373, and the second Arabic numeral indicates a smaller number than the third Arabic numeral. Reasons for these depths and the numerals have been discussed in the context of the wear indicator 240 of the tyre 100.

It has been found that such a part 300 for the mould 400 can be manufactured using an additive manufacturing technique in a cost-effective manner. In particular, the complexity of some of the embodiments, at least those provided with the first pins 340 (and optionally also the second pins 350) and/or the blade arrangement 370 and/or the threads of the fixing means 320, is at such a high level that traditional manufacturing methods become expensive. Moreover, the first surface 311, which is curved in the two directions dir1 and dir2, can also easily be manufactured using additive technology. Therefore, in an embodiment, the first surface 311 comprises markings 360 indicative of the part 300 having been made by an additive manufacturing technology. Such markings 360 have been shown in Figs. 6c and 11a. However, naturally any embodiment of the part 300 comprises such markings 360, provided that the part 300 has been made using additive manufacturing technology. Such markings 360 may be e.g. lines (as shown in Fig. 11a) indicative of the part 300 for the mould 400 having a concave first surface 311 the first surface 311 having been made by adding partial layers or lines of material onto each other. In this way, the concave first surface 311 is not entirely smooth but has tiny steps corresponding to the resolution of the additive manufacturing technology. The resolution may be expressible in DPI (dots per inch). What has been said about the markings 230 of the tyre applies *mutatis muta*ndis to the markings 360 of the part 300. Naturally, if the part 300 would be e.g. casted in a mould, the first surface 311 could be free from such markings 360.

An additive manufacturing technology in combination with the replaceable mould part, can be used to replace several process steps present in an alternative manufacturing method for manufacturing the tyre, the process steps of the alternative manufacturing method including, e.g.:
- production of blades 371, 372, 373 for the holes of the wear indicator,
- installing the blades 371, 372, 373 to a mould segment,
- cutting a post 300, and finetuning the height of the post 330,
- installing the post 330 to the mould segment,
- cutting the first/second pins 340, 350 for making the slits
- finetuning the height of the first/second pins 340, 350
- installing the fist/second pins 340, 350 to the mould segment,
- making the double curved first surface 311 in the area near the post 330 into the mould segment.

Using a replaceable part 300 comprising at least the post 330 and preferably also the first pins 340 and more preferably also the second pins 350 simplifies the process. Moreover, having the fixing means 320 so that the part is removable from the mould 400 after having been fixed thereto simplifies changing from one product line to another. Moreover, an additive manufacturing technology is especially suitable for manufacturing the part 300.

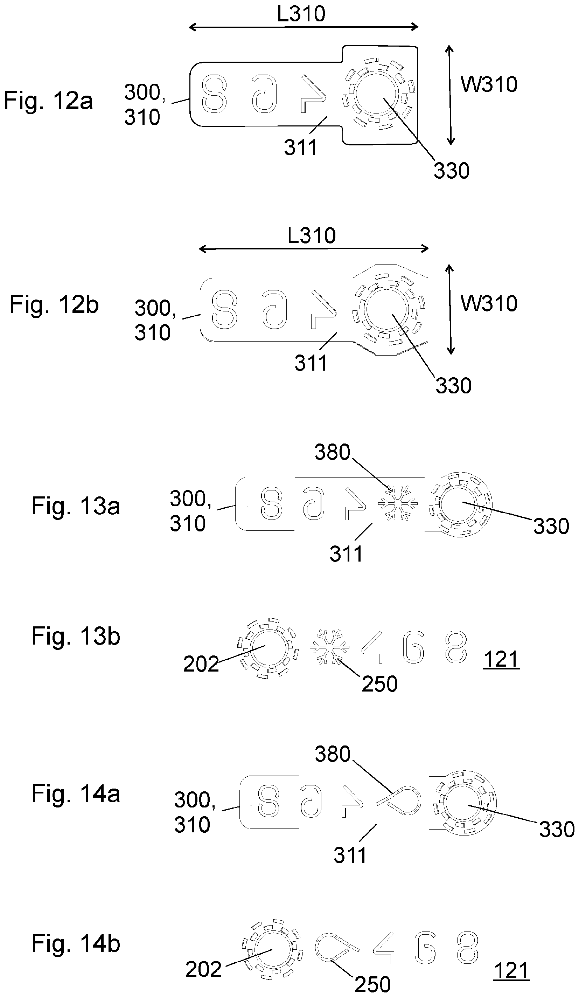

Figs. 12a and 12b show embodiments of the part 300 for the mould 400. The length L310 and width W310 of the body 310 of the part have also been shown. As shown in Figs. 12a and 12b, the shape of the body 310 of the part 300 may vary.

Fig. 13a shows an embodiment of the part 300 for the mould 400. Fig. 13b shows a pattern on a first tread block 121 formed by the part 300 of Fig. 13a. Notable, the blind hole 202 is formed by the post 330, and an insert 200 (not shown in this figure) can be inserted in the blind hole 202. The part 300 of Fig. 13a comprises a functionality blade 380. The first tread block 121 of Fig. 13b comprises a functionality hole 250 made by the functionality blade 380. In Figs. 13a and 13b, a cross-section of the functionality blade 380 or the functionality hole 250 resembles a snowflake. A depth of the functionality hole 250 is adapted such that when the functionality hole 250 has not worn off, the tyre is safe to use for use on snow. However, when the tread 110 further wears, the functionality hole 250 wear off completely, indicating that the tyre is no longer safe for use on snow.

Fig. 14a shows an embodiment of the part 300 for the mould 400. Fig. 14b shows a pattern on a first tread block 121 formed by the part 300 of Fig. 14a. The part 300 of Fig. 14a comprises a functionality blade 380. The first tread block 121 of Fig. 14b comprises a functionality hole 250 made by functionality blade 380. In Figs. 14a and 14b, a cross-section of the functionality blade 380 or the functionality hole 250 resembles a droplet. A depth of the functionality hole 250 is adapted such that when the functionality hole 250 has not worn off, the tyre is safe to use for use on wet road. However, when the tread 110 further wears, the functionality hole 250 wears off completely, indicating that the tyre is no longer safe for use on wet road.

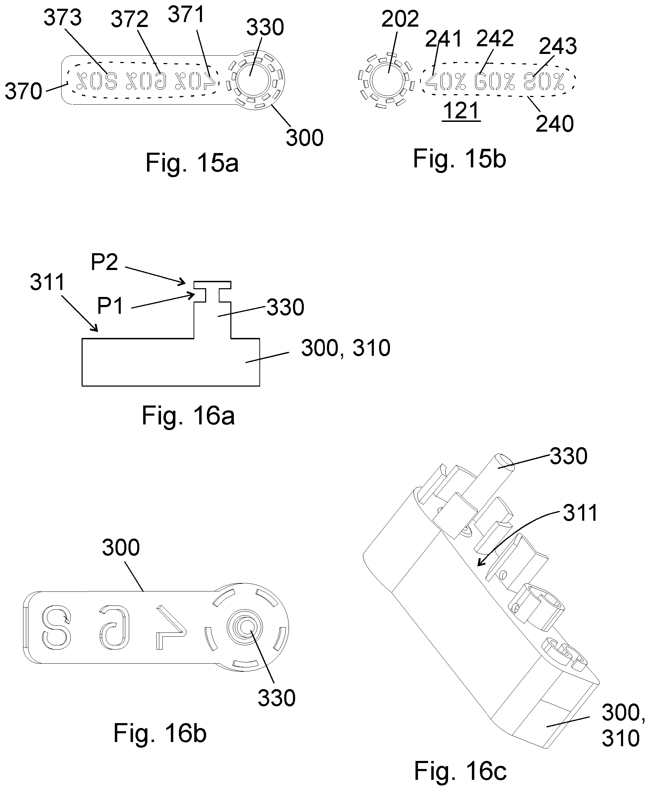

Fig. 15a shows an embodiment of the part 300 for the mould 400. Fig. 15b shows a pattern on a first tread block 121 formed by the part 300 of Fig. 15a. The part 300 of Fig. 15a the first blade 371, the second blade 372 and the third blade 373 as discussed above. They are comprised by the blade arrangement 370. However, in the embodiment of Fig. 15a the blade arrangement further comprises blades of which cross-section resembles a mirror image of a percentage sign and blades of which cross-section resembles a mirror image of the numeral zero. Moreover, the blades of which cross-section resembles a mirror image of the numeral zero are arranged between a blade for forming a percentage sign and the first blade 371, the second blade 372 and the third blade 373. In this way the first blade 371, the second blade 372 and the third blade 373 are for showing how many tens of percentages of groove depth is still left in a worn tyre. The wear indicator 240 formed by the blade arrangement 370 of Fig. 15a is shown in Fig. 15b. The wear indicator 240 of Fig. 15b comprises the first hole 241, the second hole 242, and the third hole 243 as discussed above. It further comprises three holes of which cross-section resembles the numeral zero to indicate that the holes 241, 242, 243 indicate tens of something. The wear indicator 240 further comprises three holes of which cross-section resembles the percentage sign to indicate that the holes 241, 242, 243 together with the other holes indicate tens of percentages.

Referring to Fig. 16c, in an embodiment, an area of a cross section of the post is constant throughout the length on the post 330. In terms of a width of the post, such as a diameter of the post 330, the width of the post 330 may be 4 mm to 18 mm, such as 5 mm to 15 mm, preferably 6 mm to 10 mm. A cross-section of the post 330 may be circular. Irrespective of the shape of the cross-section of the post 330, an area of the cross-section of the post 330 may be 12 mm² to 250 mm², preferably 20 mm² to 180 mm², and more preferably 28 mm² to 79 mm² (all these numbers with two significant digits). These measures apply also to the insert 200. These measures apply also to the blind hole 202. In case the post 330 has a tapering shape, these values preferably apply at the second location P2 of the post 330 as detailed below. Likewise, these values preferably apply at the second location Q2 of the blind hole 202.

As shown e.g. in Figs. 6a-6c and 8a-9b, in an embodiment, the post 330 is continuously tapering towards the first surface 311. This is also preferable in the sense that when an insert 200 is inserted into a blind hole 202 formed by such a post 330, the insert remains in its position in a reliably manner at least when a shape of the insert 200 is geometrically congruent with the blind hole 202. However, the post 330 does not need to continuously taper to towards the first surface 311. For reliable fixing it suffices that the post 330 has a smaller cross-section at a first location P1 and a larger cross-section at a second location P2, wherein the first location P1 is closer to the first surface 311 than the second location P2. In other words, the first location P1 is arranged between the first surface 311 and the second location P2. Reference is made to Fig. 16a. This applies also when the post 330 is continuously tapering towards the first surface 311, as shown in Fig. 6c. For these reasons, in a preferable embodiment, the post 330 has a first cross-section at a first location P1 and a second cross-section at a second location P2, wherein the first cross-section is smaller than the second cross-section and the first location P1 is arranged between the first surface 311 and the second location P2. What has been said about concerning the size of the post 300 applies to at the second location P2. At the first location P1 a cross section of the post 330 is, preferably, at least 5 % smaller that the cross-section of the post 330 at the second location P2. In an embodiment, at the first location P1 a cross section of the post 330 is at least 5 % to 40 % smaller that the cross-section of the post 330 at the second location P2. Moreover, preferably at the second location P2, the cross-section of the post 330 is circular and has a diameter of 4.5 mm to 8.5 mm, preferably 5.5 to 7.5 mm. In such an embodiment, preferably, at the first location P1 the cross-section of the post 330 is also circular. What has been said about the relative sizes of the cross-sections at P1 and P1 applies.

Likewise, and with reference to Fig. 2a, in an embodiment of a tyre 100, the blind hole 202 has a first cross-section at a first location Q1 and a second cross-section at a second location Q2, wherein the first cross-section is smaller than the second cross-section and the second location Q2 is arranged deeper in the blind hole 202 that the first location Q1. What has been said about the size of the post 330 applies to the size of the blind hole 202. Moreover, preferably, as shown in Fig. 2b, at least a part of the insert 200 is arranged in the blind hole 202 and a shape of the part of the insert that has been arranged in the blind hole is geometrically congruent with the shape of the blind hole 202.

## Claims

1. A tyre (100) comprising
- a tread (110) comprising a first tread block (121) and further tread blocks (122, 123), the first tread block (121) being made of first material,
- a first groove (130), of which a part is limited by a wall of the first tread block (121),
- an insert (200) made of second material, the insert (200) or a part of the insert 200) being arranged in the first tread block (121), the second material being visually distinctive from the first material, and
- first slits (210) arranged around the insert (200), wherein
- a height (H200) of the insert (200) is at least 6 mm,
- a depth (D210) of at least some of the first slits (210) is 20 % to 90 % of a depth (D130) of the groove (130), and
- at least some of the first slits (210) are arranged 1 to 5 mm apart from the insert.

2. The tyre (100) of claim 1, wherein
[A]
- the first tread block (121) or at least some of the further tread blocks (122, 123) is/are provided with sipes (150) and/or
[B]
- a part of a second groove (131) is arranged between a second tread block (122) of the further tread blocks and a third tread block (123) of the further tread blocks,
- a shape of a cross-section of the first tread block (121) is similar to a cross-section of a space (S1) encompassing the second tread block (122) and the third tread block (123).

3. The tyre (100) of claim 1 or 2, comprising
- markings (230) around the insert (200), the markings (230) being indicative of a part of the first tread block (121) around the insert (200) having been manufactured by a part of a mould that has been made by an additive manufacturing technology.

4. The tyre (100) of any of the claims 1 to 3, wherein
- a width (w1) of a cross-section of at least one of the first slits (210) is 0.2 mm to 3 mm, preferably 0.4 mm to 0.7 mm.

5. The tyre (100) of any of the claims 1 to 4, wherein
- the insert (200) is arranged in a central region (CR) of the tyre, wherein
- the central region (CR) of the tyre is arranged between a first shoulder area (SR1) and a second shoulder area (SR2),
- a width (WSR1) of the first shoulder area (SR1) is at least 20 % of a width (W110) of the tread (110), and
- a width (WSR2) of the second shoulder area (SR2) is at least 20 % of the width (W110) of the tread (110); preferably
- the insert (200) is made of elastic material having a different colour than the tread block and
- the whole insert (200) is arranged in the first tread block (121).

6. The tyre (100) of any of the claims 1 to 5, wherein
- the first tread block (121) is provided with second slits (220) such that the second slits (220) are arranged further away from the insert (200) than the first slits (210);
- in an embodiment, the second slits (220) are arranged around a first convex hull (H1) comprising the first slits (210), for example
- at least some of the second slits (220) are arranged 1 to 8 mm apart from the first convex hull (H1);
preferably,
- a depth (D220) of at least some of the second slits (220) is greater than or equal to a depth (D210) of at least some of the first slits (210).

7. The tyre (100) of any of the claims 1 to 6, comprising
- a wear indicator (240) formed as a hole (241) or holes (241, 242, 243) in the tread (110), a cross-section of at least one of the holes (241, 242, 243) resembling an Arabic numeral, wherein
- the wear indicator (240) is arranged at most 50 mm apart from the insert (200);
preferably,
- the wear indicator (240) comprises
• a first hole (241), a cross-section which resembles a first Arabic numeral, and
• a second hole (242), a cross-section which resembles a second Arabic numeral,
- the first hole (241) is deeper than the second hole (242), and
- the first Arabic numeral indicates a smaller number than the second Arabic numeral.

8. A part (300) for a mould for manufacturing a tyre, the part (300) for the mould configured to be removably fixed to the mould, the part (300) for the mould comprising
- a body (310) having a first surface (311) and a second surface (312) opposite the first surface (311),
- a fixing means (320) on the second surface (312) for attaching the body (310) to the mould for manufacturing the tyre, and
- a post (330) protruding from the first surface (311), wherein
- the first surface (311) is curved in a first direction (dir1) and in a second direction (dir2) that is perpendicular to the first direction (dir1) such that the first surface (311) is concave, whereby the first surface (311) is configured to form a part of a tread of a tyre, and
- a height (H330) of the post (330) is at least 6 mm.

9. The part of claim 8, wherein
- the fixing means (320) comprises a hole that is provided with threads or
- the fixing means (320) comprises an axle that is provided with threads.

10. The part of claim 8 or 9, wherein
- an intersection of the first surface (311) and a first plane that is defined by the first direction (dir1) and a normal (N) of the first surface (311) has a first radius of curvature, and
- an intersection of the first surface (311) and a second plane that is defined by the second direction (dir2) and a normal (N) of the first surface (311) has a second radius of curvature,
- the first radius of curvature is 275 mm to 445 mm, preferably 285 mm to 445 mm, and more preferably 300 mm to 440 mm, and
- the second radius of curvature is 50 mm to 2800 mm, preferably 110 mm to 2250 mm.

11. The part of any of the claims 8 to 10 comprising,
- first pins (340) arranged around the post (330),
- a height (H340) of at least some of the first pins is at least 20 % of the height (H330) of the post (330) and less than the height (H330) of the post (330), and
- at least some of the first pins (340) are arranged 1 to 5 mm apart from the post (330).

12. The part of claim 11 comprising,
- second pins (350) arranged around the post (330) further apart from the post (330) than the first pins (340);
in an embodiment
- the second pins (350) are arranged around a second convex hull (H2) comprising the first pins (340), for example
- at least some of the second pins (350) are arranged 1 to 8 mm apart from the second convex hull (H2);
preferably,
- a height (H350) of at least some of the second pins (350) is greater than or equal to a height (H340) of at least some of the first pins (340).

13. The part of any of the claims 8 to 12, wherein
- the first surface (311) comprises markings (360) indicative of the part (300) having been made by an additive manufacturing technology.

14. The part of any of the claims 8 to 13, comprising
- a blade arrangement (370) comprising at least a first blade (371), a cross-section of the first blade (371) resembling a mirror-image of a first Arabic numeral, wherein
- the first blade (371) is arranged at most 50 mm apart from the post (330);
preferably,
- the blade arrangement (370) comprises a second blade (372), wherein
- a cross-section of the second blade (372) resembles a mirror-image of a second Arabic numeral, wherein
- the first blade (371) is higher than the second blade (372), and
- the first Arabic numeral indicates a smaller number than the second Arabic numeral.

15. A method for manufacturing a tyre in a mould (400), the method comprising
- unfastening a first part (300a) from the mould (400),
- fastening a second part (300b) to the mould (400) to the same location from which the first part (300a) was unfastened,
- arranging a green tyre (105) into the mould (400), and
- vulcanizing the green tyre (105) in the mould to form the tyre (100), wherein
- the first part (300a) or the second part (300b) is a part (300) for the mould (400) according to any one of the claims 8 to 14.

16. The method of claim 15, wherein
- the first part (300a) or the second part (300b) that is according to any one of the claims 8 to 14 has the first surface (311), which is curved in the first direction (dir1) and in the second direction (dir2) that is perpendicular to the first direction (dir1),
- an intersection of the first surface (311) and a first plane that is defined by the first direction (dir1) and a normal (N) of the first surface (311) has a first radius of curvature, and
- an intersection of the first surface (311) and a second plane that is defined by the second direction (dir2) and a normal (N) of the first surface (311) has a second radius of curvature,
- the first radius of curvature is 275 mm to 445 mm, preferably 285 mm to 445 mm, more preferably 300 mm to 440 mm,
- the second radius of curvature is 50 mm to 2800 mm, preferably 110 mm to 2250 mm,
- the first direction (dir1) is a circumferential direction (CM) of the mould (400) for the tyre, and
- the second direction (dir2) is a transversal direction of the mould (400) for the tyre.

## Amended claims

### Amended claims in accordance with Rule 137(2) EPC.

1. A tyre (100) comprising
- a tread (110) comprising a first tread block (121) and further tread blocks (122, 123), the first tread block (121) being made of first material,
- a first groove (130), of which a part is limited by a wall of the first tread block (121), and
- an insert (200) made of second material, the insert (200) or a part of the insert 200) being arranged in the first tread block (121), the second material being visually distinctive from the first material,
**characterized by**
- first slits (210) arranged around the insert (200), wherein
- a height (H200) of the insert (200) is at least 6 mm,
- a depth (D210) of at least some of the first slits (210) is 20 % to 90 % of a depth (D130) of the groove (130), and
- at least some of the first slits (210) are arranged 1 to 5 mm apart from the insert.

2. The tyre (100) of claim 1, wherein
[A]
- the first tread block (121) or at least some of the further tread blocks (122, 123) is/are provided with sipes (150) and/or
[B]
- a part of a second groove (131) is arranged between a second tread block (122) of the further tread blocks and a third tread block (123) of the further tread blocks,
- a shape of a cross-section of the first tread block (121) is similar to a cross-section of a space (S1) encompassing the second tread block (122) and the third tread block (123).

3. The tyre (100) of claim 1 or 2, comprising
- markings (230) around the insert (200), the markings (230) being indicative of a part of the first tread block (121) around the insert (200) having been manufactured by a part of a mould that has been made by an additive manufacturing technology.

4. The tyre (100) of any of the claims 1 to 3, wherein
- a width (w1) of a cross-section of at least one of the first slits (210) is 0.2 mm to 3 mm, preferably 0.4 mm to 0.7 mm.

5. The tyre (100) of any of the claims 1 to 4, wherein
- the insert (200) is arranged in a central region (CR) of the tyre, wherein
- the central region (CR) of the tyre is arranged between a first shoulder area (SR1) and a second shoulder area (SR2),
- a width (WSR1) of the first shoulder area (SR1) is at least 20 % of a width (W110) of the tread (110), and
- a width (WSR2) of the second shoulder area (SR2) is at least 20 % of the width (W110) of the tread (110); preferably
- the insert (200) is made of elastic material having a different colour than the tread block and
- the whole insert (200) is arranged in the first tread block (121).

6. The tyre (100) of any of the claims 1 to 5, wherein
- the first tread block (121) is provided with second slits (220) such that the second slits (220) are arranged further away from the insert (200) than the first slits (210);
- in an embodiment, the second slits (220) are arranged around a first convex hull (H1) comprising the first slits (210), for example
- at least some of the second slits (220) are arranged 1 to 8 mm apart from the first convex hull (H1);
preferably,
- a depth (D220) of at least some of the second slits (220) is greater than or equal to a depth (D210) of at least some of the first slits (210).

7. The tyre (100) of any of the claims 1 to 6, comprising
- a wear indicator (240) formed as a hole (241) or holes (241, 242, 243) in the tread (110), a cross-section of at least one of the holes (241, 242, 243) resembling an Arabic numeral, wherein
- the wear indicator (240) is arranged at most 50 mm apart from the insert (200);
preferably,
- the wear indicator (240) comprises
• a first hole (241), a cross-section which resembles a first Arabic numeral, and
• a second hole (242), a cross-section which resembles a second Arabic numeral,
- the first hole (241) is deeper than the second hole (242), and
- the first Arabic numeral indicates a smaller number than the second Arabic numeral.

8. A part (300) for a mould for manufacturing a tyre, the part (300) for the mould comprising
- a body (310) having a first surface (311) and a second surface (312) opposite the first surface (311),
- a fixing means (320) on the second surface (312) for attaching the body (310) to the mould for manufacturing the tyre, and
- a post (330) protruding from the first surface (311), wherein
- a height (H330) of the post (330) is at least 6 mm,
**characterized by**
- first pins (340) arranged around the post (330), wherein
- a height (H340) of at least some of the first pins is at least 20 % of the height (H330) of the post (330) and less than the height (H330) of the post (330),
- at least some of the first pins (340) are arranged 1 to 5 mm apart from the post (330),
- the part (300) for the mould is configured to be removably fixed to the mould, and
- the first surface (311) is curved in a first direction (dir1) and in a second direction (dir2) that is perpendicular to the first direction (dir1) such that the first surface (311) is concave, whereby the first surface (311) is configured to form a part of a tread of a tyre.

9. The part of claim 8, wherein
- the fixing means (320) comprises a hole that is provided with threads or
- the fixing means (320) comprises an axle that is provided with threads.

10. The part of claim 8 or 9, wherein
- an intersection of the first surface (311) and a first plane that is defined by the first direction (dir1) and a normal (N) of the first surface (311) has a first radius of curvature, and
- an intersection of the first surface (311) and a second plane that is defined by the second direction (dir2) and a normal (N) of the first surface (311) has a second radius of curvature,
- the first radius of curvature is 275 mm to 445 mm, preferably 285 mm to 445 mm, and more preferably 300 mm to 440 mm, and
- the second radius of curvature is 50 mm to 2800 mm, preferably 110 mm to 2250 mm.

11. The part of claim 10 comprising,
- second pins (350) arranged around the post (330) further apart from the post (330) than the first pins (340).

12. The part of claim 12, wherein
- the second pins (350) are arranged around a second convex hull (H2) comprising the first pins (340), for example
- at least some of the second pins (350) are arranged 1 to 8 mm apart from the second convex hull (H2);
preferably,
- a height (H350) of at least some of the second pins (350) is greater than or equal to a height (H340) of at least some of the first pins (340).

13. The part of any of the claims 8 to 12, wherein
- the first surface (311) comprises markings (360) indicative of the part (300) having been made by an additive manufacturing technology.

14. The part of any of the claims 8 to 13, comprising
- a blade arrangement (370) comprising at least a first blade (371), a cross-section of the first blade (371) resembling a mirror-image of a first Arabic numeral, wherein
- the first blade (371) is arranged at most 50 mm apart from the post (330); preferably,
- the blade arrangement (370) comprises a second blade (372), wherein
- a cross-section of the second blade (372) resembles a mirror-image of a second Arabic numeral, wherein
- the first blade (371) is higher than the second blade (372), and
- the first Arabic numeral indicates a smaller number than the second Arabic numeral.

15. A method for manufacturing a tyre in a mould (400), the method comprising
- unfastening a first part (300a) from the mould (400),
- fastening a second part (300b) to the mould (400) to the same location from which the first part (300a) was unfastened,
- arranging a green tyre (105) into the mould (400), and
- vulcanizing the green tyre (105) in the mould to form the tyre (100), wherein
- the first part (300a) or the second part (300b) is a part (300) for the mould (400) according to any one of the claims 8 to 14.

16. The method of claim 15, wherein
- the first part (300a) or the second part (300b) that is according to any one of the claims 8 to 14 has the first surface (311), which is curved in the first direction (dir1) and in the second direction (dir2) that is perpendicular to the first direction (dir1),
- an intersection of the first surface (311) and a first plane that is defined by the first direction (dir1) and a normal (N) of the first surface (311) has a first radius of curvature, and
- an intersection of the first surface (311) and a second plane that is defined by the second direction (dir2) and a normal (N) of the first surface (311) has a second radius of curvature,
- the first radius of curvature is 275 mm to 445 mm, preferably 285 mm to 445 mm, more preferably 300 mm to 440 mm,
- the second radius of curvature is 50 mm to 2800 mm, preferably 110 mm to 2250 mm,
- the first direction (dir1) is a circumferential direction (CM) of the mould (400) for the tyre, and
- the second direction (dir2) is a transversal direction of the mould (400) for the tyre.
